# EUROPEAN PATENT APPLICATION

(11) **EP 3 260 263 A1**
(43) Date of publication of application: **27.12.2017**
(21) Application number: 16803111.0
(22) Date of filing: 23.05.2016
(51) Int. Cl.: B29C 35/08, B29C 65/14, B29C 70/06

(54) **CURING DEVICE FOR RESIN COMPOSITE MATERIAL, CURING METHOD, AND MOLDED RESIN ARTICLE**

(30) Priority: 03.06.2015 JP 2015113320
(71) Applicant: Mitsubishi Heavy Industries, Ltd., Tokyo 108-8215 (JP)
(72) Inventor: KAMIHARA, Nobuyuki, Tokyo 108-8215 (JP); ABE, Toshio, Tokyo 108-8215 (JP)
(74) Representative: Henkel, Breuer & Partner
(86) International application number: PCT/JP2016/065167
(87) International publication number: WO 2016/194676

(57) **Abstract**

In order to use a laser to cure a resin composite material to a high strength with simple equipment, this curing device (1) is provided with: a pressing body (4) which is formed from a material that transmits a laser beam (L) (quartz glass, for example) and which, when pressed against the surface of an uncured resin composite material (2), applies pressure on the resin composite material (2); and a laser beam supply unit (5) which irradiates a laser beam (L) through the pressing body (4) onto the uncured resin composite material (2). This curing device is further provided with an irradiation position adjustment unit (6) which, within the area pressed by the pressing body (4), moves the position irradiated by the laser beam (L) supplied from the laser beam supply unit (5).

## Description

### Technical Field

The present invention relates to a curing device for a resin composite material, a curing method, and a molded resin article.

### Background Art

As described in PTL 1 or the like, it is known that a characteristic improvement, enhancement of function, and a structure modification such as a composition modification of a specific portion of a resin material can be achieved by irradiating the resin material with laser beam so as to heat the specific portion of the resin material. In a composite material such as a prepreg, other thermosetting resins, or thermoplastic resins, it is considered to irradiate uncured materials or resins with a laser beam to heat the materials or the resins. Accordingly, it is possible to easily manufacture a molded resin article without using large equipment such as an autoclave, and it is possible to decrease manufacturing costs.

### Citation List

### Patent Literature

[PTL 1] Japanese Patent No. 3953891

### Summary of Invention

### Technical Problem

However, in a case where a resin composite material such as a prepreg is cured, in order to obtain predetermined strength, the resin composite material should be not only heated but be also pressurized simultaneously with the heating to remove bubbles. In general, an uncured resin composite material is molded into a predetermined shape of molded resin article using a molding tool, a jig, or the like, the molded resin composite material is enclosed by a vacuum bag so as to be evacuated in order to increase adhesion with respect to the jig, the molding tool, or the like. Thereafter, all resin composite materials are accommodated in a heater such as an autoclave and are cured while being heated, pressurized, and degassed.

Since all pressurization members such as the jig, the molding tool, or the vacuum bag are formed of a material which blocks a laser beam, as described above, it is not possible to irradiate an uncured resin composite material with a laser beam so as to heat and cure the uncured resin composite material. Accordingly, it is indispensable to heat the uncured resin composite material by an oven, an autoclave, or the like, and it is necessary to prepare the equipment for each product shape, which causes an increase in the manufacturing cost of a molded resin article.

The present invention is made in consideration of the above-described circumstances, and an object thereof is to provide a curing device for a resin composite material, a curing method, and molded resin article capable of curing a resin composite material with high strength by simple equipment using a laser beam.

### Solution to Problem

In order to achieve the object, the present invention adopts the following means.

According to a first aspect of the present invention, there is provided a curing device for a resin composite material, including: a pressurizing body which is formed of a material through which a laser beam passes and comes into pressure-contact with a surface of an uncured resin composite material to pressurize the resin composite material; and a laser beam supply unit which irradiates the uncured resin composite material with the laser beam through the pressurizing body.

According to the curing device having the above-described configuration, the surface of the resin composite material is irradiated with the laser beam supplied from the laser beam supply unit through the pressurizing body while the pressurizing body comes into pressure-contact with the surface of the uncured resin composite material so as to be pressurized, and the resin composite material can be heated and cured. In addition, degassing of the resin composite material is performed by heating the resin composite material while pressurizing the resin composite material and it is possible to increase molding strength.

The pressurizing body may not be set to a size which comes into pressure-contact with the entire surface of the molded resin article manufactured by the resin composite material. That is, the pressurizing body is formed to have a size which comes into pressure-contact with only a portion of the surface of the resin composite material (molded resin article), and the entire resin composite material can be cured by repeating pressurization and heating with respect to the surface of the resin composite material partially by using the pressurizing body. Accordingly, unlike the related art, it is not necessary to prepare a vacuum bag capable of accommodating the entire resin composite material (molded resin article) or a heater such as an autoclave having a large capacity, and it is possible to easily cure the resin composite material using simple equipment.

As a material of the pressurizing body, quartz glass is suitable. Since the quartz glass has good transmissivity of a laser beam, high heat resistance and chemical resistance, and high hardness, even if the cured resin material adheres to the pressurizing body, it is possible to easily separate the resin material from the pressurizing body, and it is possible to grind the surface of the pressurizing body again. Moreover, since the quartz glass is a material which is widely used, the quartz glass is relatively inexpensive and is suitably used as the material of the pressurizing body.

In the above-described configuration, an irradiation position adjustment unit which moves an irradiation position of the laser beam supplied from the laser beam supply unit within a pressurization range of the pressurizing body may be provided.

According to this configuration, for example, it is possible to move (expand) the irradiation position of the laser beam from one location within the pressurization range of the pressurizing body toward the peripheral portion thereof. Accordingly, by extracting bubbles included in the uncured resin composite material to the outside of the pressurization range and finally, removing all the bubbles within the pressurization range, it is possible to cure the resin composite material with high strength.

In the above configuration, the laser beam supply unit may supply the laser beam to the resin composite material by an optical fiber. By supplying the laser beam to the resin composite material using the optical fiber having flexibility, it is possible to freely set a relative positional relationship between the laser beam supply unit and the pressurizing body, and it is possible to simplify the configuration of the curing device.

In the above configuration, the laser beam supply unit may supply the laser beam to the resin composite material by a plurality of optical fibers, and the irradiation position adjustment unit may select any one of the plurality of optical fibers to supply the laser beam.

According to this configuration, the relative positional relationship between the laser beam supply unit and the pressurizing body is freely set by the optical fiber having flexibility, the configuration of the curing device is simplified, the irradiation position of the laser beam is selected such that the bubbles included in the resin composite material are extracted to the outside of the pressurization range, and thereby, it is possible to increase the molding strength of the resin composite material.

In the above configuration, preferably, the optical fiber is inserted into a fiber insertion hole formed in the pressurizing body and the fiber insertion hole is closed in front of a pressurization surface of the pressurizing body.

According to this configuration, since the fiber insertion hole is not open to the pressurization surface of the pressurizing body, it is possible to prevent the tip portion of the optical fiber inserted into the fiber insertion hole from being contaminated due to a contact of the tip portion with respect to the uncured resin composite material, and it is possible to cure the resin composite material with high strength by favorably irradiating the resin composite material with the laser beam supplied via the optical fiber.

In the above configuration, the pressurizing body may be configured such that a plurality of pressurizers are adjacent to each other, the plurality of pressurizers may come into pressure-contact with and be separated from the surface of the resin composite material independently to each other, and the laser beam may be independently supplied from the laser beam supply unit to each of the pressurizers.

According to this configuration, the pressure-contacts of the pressurizers are sequentially performed from one point within the pressurization range of the pressurizing body toward the peripheral portion thereof, and the laser beam can be supplied to only the pressure-contacted pressurizer. Accordingly, the pressurization can be performed such that the bubbles included in the uncured resin composite material are extracted from one point of the pressurization range toward the peripheral portion thereof, the degassing is favorably performed on the resin composite material, and it is possible to cure the resin composite material with high strength.

In the above configuration, the pressurization surface of the pressurizing body may have a shape such that the pressurization surface can roll on the surface of the resin composite material while coming into pressure-contact with the surface of the resin composite material, and the laser beam supply unit may emit the laser beam within a range of the pressurization surface which comes into pressure-contact with the surface of the resin composite material.

According to this configuration, in the pressurization surface of the pressurizing body which rolls on the surface of the resin composite material, the laser beam from the laser beam supply unit can be emitted to only a range of the pressurization surface which comes into pressure-contact with the surface of the resin composite material. Therefore, the pressurization can be performed to continuously extract the bubbles included in the uncured resin composite material from the one point of the pressurization range toward the peripheral portion thereof, the degassing is favorably performed on the resin composite material, and it is possible to cure the resin composite material with high strength. In addition, it is possible to omit the process of separating the pressurizing body after curing the resin composite material from the resin composite material.

According to a second aspect of the present invention, there is provided a curing method for a resin composite material, including: a pressurization step of allowing a pressurizing body formed of a material through which a laser beam passes to come into pressure-contact with a surface of an uncured resin composite material to pressurize the surface of the uncured resin composite material; and a laser beam irradiation step of irradiating the uncured resin composite material with a laser beam through the pressurizing body.

In the curing method, first, in the pressurization step, the pressurizing body comes into pressure-contact with the surface of the uncured resin composite material, and next, in the laser beam irradiation step, the resin composite material is irradiated with the laser beam through the pressurizing body, and the curing of the resin composite material is performed.

According to the curing method, it is possible to heat the resin composite material by the laser beam while pressurizing an arbitrary location of the uncured resin composite material by the pressurizing body. In addition, since the degassing of the resin composite material is performed by performing pressurizing simultaneously with the heating, it is possible to increase molding strength.

The pressurizing body may not be set to a size which comes into pressure-contact with the entire surface of the molded resin article manufactured by the resin composite material. That is, the entire resin composite material can be cured by repeating pressurization and heating with respect to the surface of the resin composite material partially by using the pressurizing body formed to have a size which comes into pressure-contact with only a portion of the surface of the resin composite material (molded resin article). Accordingly, it is possible to easily cure the resin composite material by simple equipment.

In the curing method, preferably, in the laser beam irradiation step, the irradiation position of the laser beam expands from one point of the pressurization range of the pressurizing body toward a peripheral portion thereof.

According to this method, the resin composite material is softened from one location of the pressurization range of the pressurizing body toward the peripheral portion thereof by the heat of the laser beam, and simultaneously with this, bubbles included in the resin composite material are extracted from one location of the pressurization range toward the peripheral portion thereof. Accordingly, finally, all the bubbles within the pressurization range are removed, and it is possible to soften the resin composite material with high strength.

In the curing method, preferably, in the pressurization step, pressurization is sequentially performed from one point of the pressurization range of the pressurizing body toward the peripheral portion thereof. In this way, since the pressurization is sequentially performed from one point of the pressurization range of the pressurizing body toward the peripheral portion thereof, it is possible to extract the bubbles included in the uncured resin composite material from one point of the pressurization range toward the peripheral portion, the degassing is favorably performed on the resin composite material, and it is possible to cure the resin composite material with high strength.

According to a third aspect of the present invention, there is provided a molded resin article which is manufactured by the curing method for a resin composite material. since the molded resin article is pressurized and degassed during the curing, the molded resin article has high strength.

### Advantageous Effects of Invention

As described above, according to the resin composite material and the curing device of the present invention, it is possible to cure a resin composite material with high strength by simple equipment using a laser beam. In addition, since the molded resin article according to the present invention is pressurized and degassed during the curing, the molded resin article has high strength.

### Brief Description of Drawings

Fig. 1A is a longitudinal sectional view of a lamination step showing a first embodiment of the present invention.
Fig. 1B is a longitudinal sectional view of a pressurization step showing the first embodiment of the present invention.
Fig. 1C is a longitudinal sectional view of a laser beam irradiation step showing the first embodiment of the present invention.
Fig. 1D is a longitudinal sectional view of a mold release step showing a first embodiment of the present invention.
Fig. 2 is a flowchart showing a curing method according to the present invention.
Fig. 3A is a longitudinal sectional view of a lamination step showing a second embodiment of the present invention.
Fig. 3B is a longitudinal sectional view of a pressurization step showing the second embodiment of the present invention.
Fig. 3C is a longitudinal sectional view of a laser beam irradiation step showing the second embodiment of the present invention.
Fig. 3D is a longitudinal sectional view of a mold release step showing a second embodiment of the present invention.
Fig. 4A is a longitudinal sectional view of a lamination step showing a third embodiment of the present invention.
Fig. 4B is a longitudinal sectional view of a pressurization and laser beam irradiation step showing the third embodiment of the present invention.
Fig. 4C is a longitudinal sectional view of the pressurization and laser beam irradiation step showing the third embodiment of the present invention.
Fig. 4D is a longitudinal sectional view of a mold release step showing the third embodiment of the present invention.
Fig. 5A is a longitudinal sectional view of a lamination step showing a fourth embodiment of the present invention.
Fig. 5B is a longitudinal sectional view of a pressurization and laser beam irradiation step showing the fourth embodiment of the present invention.
Fig. 5C is a longitudinal sectional view of the pressurization and laser beam irradiation step showing the fourth embodiment of the present invention.
Fig. 5D is a longitudinal sectional view of a mold release step showing the fourth embodiment of the present invention.

### Description of Embodiments

Hereinafter, a plurality of embodiments of the present invention will be described with reference to the drawings.

### [First Embodiment]

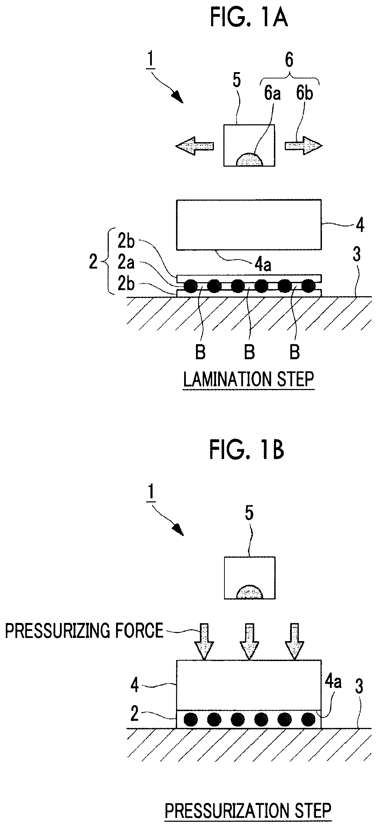

Figs. 1A to 1D are longitudinal sectional views showing a curing device 1 and a curing method according to a first embodiment of the present invention.

For example, a curing device 1 is a device which heats and cures an uncured prepreg 2 (resin composite material) while pressurizing the prepreg 2 in a thickness direction thereof. As well known, the prepreg 2 is a semi-integrated and deformable intermediate molding material obtained by laminating or impregnating a thermosetting or thermoplastic resin material 2b on a fibrous reinforcing material 2a such as carbon fibers or glass fibers. By laminating the prepreg 2 on a forming base 3 or a molding tool (not shown), a jig, or the like and heating the prepreg 2 while pressurizing (compressing) the prepreg 2 in the thickness direction, bubbles (voids) B included between the fibrous reinforcing material 2a and the resin material 2b are removed and a tough molded resin article 2A is obtained.

The curing device 1 is configured to include a pressurizing body 4 which pressurizes the prepreg 2 laminated on the forming base 3, the molding tool, the jig, or the like, a laser beam supply unit 5 such as a laser oscillator which irradiates the prepreg 2 with a laser beam L through the pressurizing body 4, and an irradiation position adjustment unit 6 which adjusts an irradiation position of the laser beam L.

The pressurizing body 4 is formed of a material through which the laser beam L favorably passes. Most preferably, the material is quartz glass. In addition, in the present embodiment, the pressurizing body 4 is formed in a rectangular parallelepiped shape having a flat pressurization surface 4a. However, the pressurizing body 4 may be formed in a flat plate shape, a shape having a curved surface, or other shapes as long as it has a pressurization surface shape which comes into close contact with the surface of the prepreg 2. The shape of the forming base 3 or the like on which the prepreg 2 is placed is not limited to a flat shape and may be a curved shape, or the like.

The laser beam supply unit 5 is a configuration portion which emits the laser beam L such as a CO₂ laser or an YAG laser, and the irradiation position adjustment unit 6 is a configuration portion which moves an irradiation position of the laser beam L emitted from the laser beam supply unit 5 within a pressurization range of the prepreg 2 performed by the pressurizing body 4.

The pressurizing body 4 comes into pressure-contact with the surface of the prepreg 2 by a force of a drive device (not shown), weight of a mass, or the like. Meanwhile, the laser beam L emitted from the laser beam supply unit 5 is required so as not to be blocked by the drive device, the weight, or the like.

For example, as the irradiation position adjustment unit 6, an irradiation direction adjustment unit 6a which is incorporated into the laser beam supply unit 5 and adjusts an irradiation direction (irradiation angle) of the laser beam L, a position adjustment unit 6b which moves the position of the entire laser beam supply unit 5 in a surface direction of the prepreg 2, or the like is considered. However, other configurations may be adopted as long as these can move the irradiation position of the laser beam L with respect to the prepreg 2.

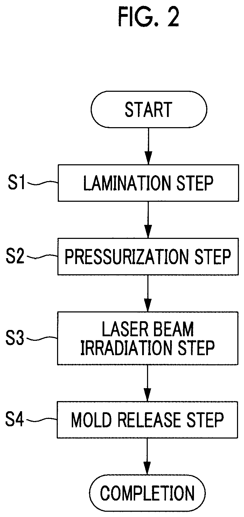

The curing method for the prepreg 2 is performed as follows by the curing device 1 configured as described above. In addition, Fig. 2 is a flowchart showing the curing method for the prepreg 2.

First, as shown in Fig. 1A, the uncured prepreg 2 is laminated (placed, wound, or the like) on the forming base 3, a predetermined molding tool, a jig, or the like (lamination step S1).

Next, as shown in Fig. 1B, the pressurizing body 4 comes into pressure-contact with the surface of the uncured prepreg 2, and the surface of the uncured prepreg 2 is pressurized by the pressurization surface 4a of the pressurizing body 4 (pressurization step S2). In this case, a pressurizing force is set such that bubbles B included inside the prepreg 2 are extracted to the outside.

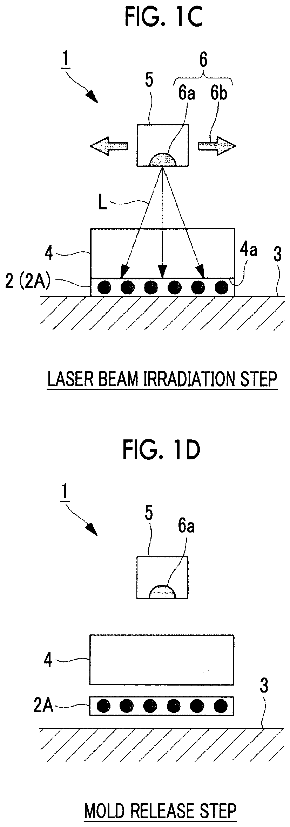

Next, as shown in Fig. 1C, the laser beam supply unit 5 irradiates the prepreg 2 with the laser beam L (laser beam irradiation step S3). The laser beam L passes through the pressurizing body 4, the prepreg 2 is irradiated with the laser beam L, and the prepreg 2 is heated and softened. In this case, the irradiation position of the laser beam L is moved from one point of the pressurization range of the pressurizing body 4, for example, the center portion toward the peripheral portion thereof by the irradiation position adjustment unit 6.

In addition, if the pressurization (pressurization step S2) performed by the pressurizing body 4 and the irradiation (laser beam irradiation step S3) of the laser beam L may simultaneously start, and the pressurization (pressurization step S2) performed by the pressurizing body 4 may start after the softening of the resin material 2b performed by the irradiation (laser beam irradiation step S3) of the laser beam L starts.

Sine the irradiation position of the laser beam L moves from the center portion of the pressurization range of the pressurizing body 4 toward the peripheral portion, the resin material 2b of the prepreg 2 is sequentially softened from the center portion of the pressurization range toward the peripheral portion thereof, the bubbles B included in the prepreg 2 are extracted from the center portion toward the peripheral portion, and finally, all the bubbles B within the pressurization range are removed.

In a case where the resin material 2b of the prepreg 2 is a thermosetting resin, a curing reaction is generated by pressurizing the softened resin material 2b and the resin material 2b is cured. Meanwhile, in a case where the resin material 2b is a thermoplastic resin, the resin material 2b is cured by cooling the heated resin material 2b.

In addition, the irradiation start position of the laser beam L may not necessarily be positioned at the center portion of the pressurization range of the pressurizing body 4. For example, initially, one end portion of the pressurization range is irradiated with the laser beam, and the irradiation position may move from the one end portion of the pressurization range toward the other end portion thereof. Even in this case, similarly, the bubbles B included in the prepreg 2 can be extracted from the one end portion of the pressurization range toward the other end portion thereof.

If the prepreg 2 is cured by the pressurization performed by the pressurizing body 4 and the irradiation of the laser beam L, the position at which the pressurizing body 4 comes into pressure-close with the prepreg 2 is shifted, and the pressurization performed by the pressurizing body 4 and the irradiation of the laser beam L are performed again. By repeating this, the entire of the prepreg 2 is cured and the molded resin article 2A is formed.

Finally, as shown in Fig. 1D, the pressurizing body 4 is separated from the molded resin article 2A, and the molded resin article 2A is separated from the forming base 3 to complete the molded resin article 2A (mold release step S4).

According to the above-described curing device 1 and curing method, the surface of the prepreg 2 is irradiated with the laser beam L supplied from the laser beam supply unit 5 through the pressurizing body 4 while the pressurizing body 4 comes into pressure-contact with the surface of the uncured prepreg 2 positioned at an arbitrary location thereof and is pressurized, and the prepreg 2 can be heated and cured. In addition, degassing of the prepreg 2 is performed by heating the prepreg 2 while pressurizing the prepreg 2 and it is possible to increase molding strength of the molded resin article 2A.

The pressurizing body 4 may not be set to a size which comes into pressure-contact with the entire surface of the molded resin article 2A manufactured by the prepreg 2. That is, the pressurizing body 4 is formed to have a size or a shape which comes into pressure-contact with only a portion of the surface of the prepreg 2 (molded resin article 2A), and the entire prepreg 2 can be cured by partially repeating pressurization and heating with respect to the surface of the prepreg 2 a plurality of times using the pressurizing body 4. Accordingly, unlike the related art, it is not necessary to prepare a vacuum bag capable of accommodating the entire prepreg 2 (molded resin article 2A) or a heater such as an autoclave having a large capacity, and it is possible to easily heat a thermosetting resin or a thermoplastic resin such as a prepreg 2 using simple equipment.

Since the curing device 1 includes the irradiation position adjustment unit 6 which moves the irradiation position of the laser beam L supplied from the laser beam supply unit 5 within the pressurization range of the pressurizing body 4, as described above, it is possible to expand the irradiation position of the laser beam L from one point of the pressurization range of the pressurizing body 4 toward the peripheral portion thereof, for example, it is possible to expand the irradiation position in an annular shape.

In this way, by expanding the irradiation position of the laser beam L from one point of the pressurization range toward the peripheral portion thereof, the prepreg 2 is softened from one location of the pressurization range toward the peripheral portion thereof by the heat of the laser beam L. At the same time, the bubbles B included in the uncured prepreg 2 are extracted toward the peripheral portion. Accordingly, finally, all the bubbles B within the pressurization range are removed, and it is possible to soften the prepreg 2 with high strength.

In this curing device 1, quartz glass is used as the material of the pressurizing body 4. Since the quartz glass has good transmissivity of the laser beam L, high heat resistance and chemical resistance, and high hardness, even if the cured resin material adheres to the pressurizing body 4, it is possible to easily separate the resin material from the pressurizing body 4, and it is possible to grind the surface of the pressurizing body 4 again. Moreover, since the quartz glass is a material which is widely used, the quartz glass is relatively inexpensive. Therefore, the quartz glass is suitably used as the material of the pressurizing body 4.

### [Second Embodiment]

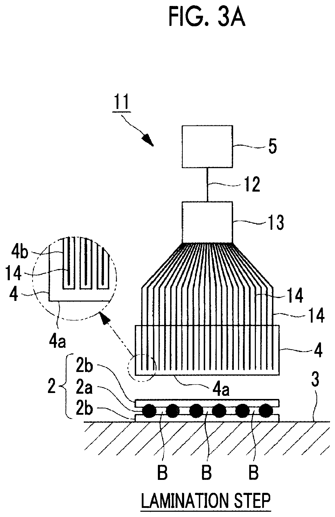

Figs. 3A to 3D are longitudinal sectional views showing a curing device 11 and a curing method according to a second embodiment of the present invention.

In this curing device 11, the laser beam supply unit 5 supplies the laser beam L to the prepreg 2 via one optical fiber 12, a demultiplexer 13 which is an irradiation position adjustment unit, and a plurality of optical fibers 14. Other configurations are similar to those of the curing device 1 of the first embodiment.

As shown in Fig. 3A to be partially enlarged, the tip portions of the plurality of optical fibers 14 are inserted into the fiber insertion holes 4b formed from the upper surface side of the pressurizing body 4 toward the pressurization surface 4a side, and the fiber insertion holes 4b are closed in front of the pressurization surface 4a. Accordingly, the tip portion of each optical fiber 14 does not protrude from the pressurization surface 4a.

The laser beam L supplied from the laser beam supply unit 5 to the demultiplexer 13 via one optical fiber 12 is supplied from the plurality of optical fibers 14 to the pressurizing body 4. In this case, the demultiplexer 13 can move the irradiation position of the laser beam L within the pressurization range of the pressurizing body 4. Specifically, by sequentially supplying the laser beam L from the optical fiber 14 positioned at one point within the pressurization range (within the pressurization surface 4a) of the pressurizing body 4 among the plurality of fibers 14 toward the optical fibers positioned at the peripheral portion, it is possible to expand the irradiation range of the laser beam L in an annular shape.

The curing method for the prepreg 2 is performed as follows by the curing device 11 configured as described above. This curing method is also performed according to the procedure of the flowchart shown in Fig. 2.

First, as shown in Fig. 3A, the uncured prepreg 2 is laminated (placed, wound, or the like) on the forming base 3, a predetermined molding tool, a jig, or the like (lamination step S1).

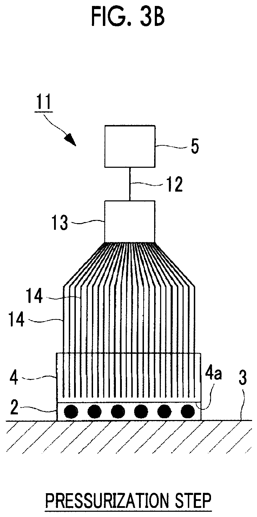

Next, as shown in Fig. 3B, the pressurizing body 4 comes into pressure-contact with the surface of the uncured prepreg 2, and the surface of the uncured prepreg 2 is pressurized by the pressurization surface 4a of the pressurizing body 4 (pressurization step S2). In this case, a pressurizing force is set such that bubbles B included inside the prepreg 2 are extracted to the outside.

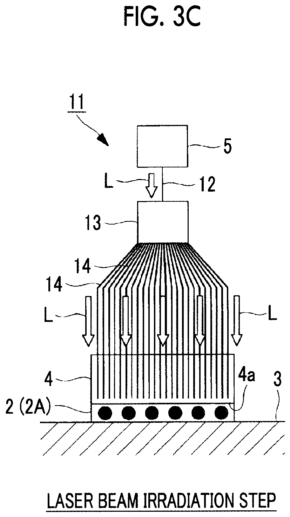

Next, as shown in Fig. 3C, the laser beam supply unit 5 irradiates the prepreg 2 with laser beam L via the optical fiber 12, the demultiplexer 13, the optical fibers 14, and the pressurizing body 4 (laser beam irradiation step S3). The laser beam L passes through the pressurizing body 4, the prepreg 2 is irradiated with the laser beam L, and the prepreg 2 is heated.

In this case, the laser beam L is emitted from each optical fiber 14 such that the irradiation position of the laser beam L is moved from one point of the pressurization range of the pressurizing body 4, for example, the center portion toward the peripheral portion thereof by the demultiplexer 13 which is an irradiation position adjustment unit.

Moreover, the pressurization (pressurization step S2) of the pressurizing body 4 and the irradiation (laser beam irradiation step S3) of the laser beam L may simultaneously start, and the pressurization (pressurization step S2) performed by the pressurizing body 4 may start after the softening of the resin material 2b performed by the irradiation (laser beam irradiation step S3) of the laser beam L starts.

By moving the irradiation position of the laser beam L from the center portion of the pressurization range of the pressurizing body 4 toward the peripheral portion thereof, the resin material 2b of the prepreg 2 is sequentially softened from the center portion of the pressurization range toward the peripheral portion, and the bubbles B included in the prepreg 2 are extracted from the center portion toward the peripheral portion simultaneously with the softening.

In a case where the resin material 2b of the prepreg 2 is a thermosetting resin, a curing reaction is generated by pressurizing the softened resin material 2b and the resin material 2b is cured. Meanwhile, in a case where the resin material 2b is a thermoplastic resin, the resin material 2b is cured by cooling the heated resin material 2b.

In addition, similarly to the first embodiment, the irradiation start position of the laser beam L may not necessarily be positioned at the center portion of the pressurization range of the pressurizing body 4. In addition, similarly to the first embodiment, by shifting the pressure-contact position of the pressurizing body 4 every the prepreg 2 is hardened and repeating the pressurization performed by the pressurizing body 4 and the irradiation of the laser beam L again, the entire prepreg 2 is hardened and the molded resin article 2A is formed.

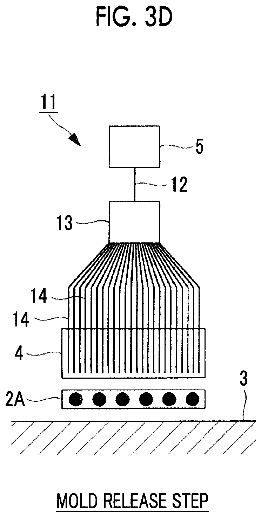

Finally, as shown in Fig. 3D, the pressurizing body 4 is separated from the molded resin article 2A, and the molded resin article 2A is separated from the forming base 3 to complete the molded resin article 2A (mold release step S4).

According to the curing device 11 and the curing method of the second embodiment, effects similar to those of the curing device 1 and the curing method of the first embodiment are obtained. In addition to the effects, since the curing device 11 supplies the laser beam L from the laser beam supply unit 5 to the pressurizing body 4 via the soft optical fibers 12 and 14, it is possible to freely set a relative positional relationship between the laser beam supply unit 5 and the pressurizing body 4. That is, since the laser beam L which straightly advances in a space is freely curved and can be supplied to the pressurizing body 4, for example, the device is configured such that only the pressurizing body 4 can move in a state where the laser beam supply unit 5 is fixed. Accordingly, it is possible to simplify (freely set) the configuration of the curing device 11.

In addition, by supplying the laser beam L from the optical fiber 14 positioned at one point within the pressurization range of the pressurizing body 4 among the plurality of optical fibers 14 toward the optical fibers 14 positioned on the peripheral portion thereof by the demultiplexer 13, it is possible to soften the resin material 2b in this order. Accordingly, it is possible to increase the molding strength of the prepreg 2 by extracting the bubbles included in the prepreg 2 from one point within the pressurization range toward the peripheral portion thereof.

In addition, since the plurality of optical fibers 14 are inserted into the fiber insertion holes 4b formed in the pressurizing body 4 and the fiber insertion holes 4b are closed in front of the pressurization surface 4a of the pressurizing body 4, it is possible to prevent the tip portion of each optical fiber 14 from being contaminated due to a contact of the tip portion with respect to the uncured resin material. Accordingly, it is possible to cure the prepreg 2 with high strength by favorably irradiating the prepreg 2 with the laser beam L supplied via the optical fibers 14.

### [Third Embodiment]

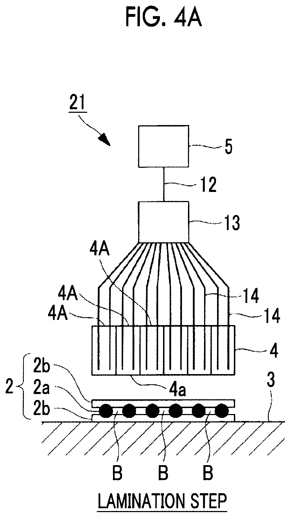

Figs. 4A to 4D are longitudinal sectional views showing a curing device 21 and a curing method according to a third embodiment of the present invention.

In the curing device 21, the pressurizing body 4 is configured such that a plurality of pressurizers 4A are adjacent to each other, and the laser beam L is individually supplied from the laser beam supply unit 5 to each of the pressurizers 4A. The plurality of pressurizers 4A can come into pressure-contact with and can be separated from the surface of the prepreg 2 independently to each other.

Since other portions are similar to those of the curing device 11 of the second embodiment, the same numeral reference is assigned to each portion, and detail descriptions thereof are omitted.

The curing method for the prepreg 2 is performed as follows by the curing device 21.

First, as shown in Fig. 4A, the uncured prepreg 2 is laminated (placed, wound, or the like) on the forming base 3, a predetermined molding tool, a jig, or the like (lamination step).

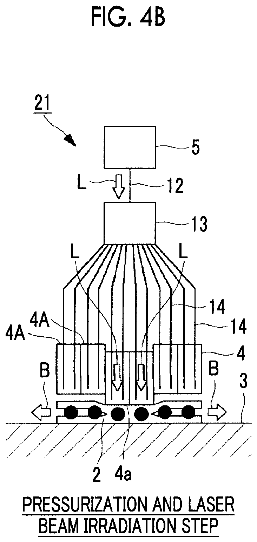

Next, as shown in Fig. 4B, the pressurizing body 4 comes into pressure-contact with the surface of the uncured prepreg 2, and the surface of the uncured prepreg 2 is pressurized by the pressurization surface 4a of the pressurizing body 4 (pressurization step). In this case, the pressurization is sequentially performed from one point of the pressurization range of the pressurizing body 4 toward the peripheral portion thereof. That is, among the plurality of pressurizers 4A arranged to be adjacent to each other, for example, first, the pressurizer 4A positioned in the vicinity of the center comes into pressure-contact with the surface of the prepreg 2, the laser beam L is supplied to this pressurizer 4A, and the pressurized portion of the prepreg 2 is irradiated with the laser beam L (laser beam irradiation step).

The resin material 2b of the prepreg 2 is softened by the irradiation of the laser beam L, and the bubbles B included inside the prepreg 2 are extracted to the outside by the pressing of the pressurizer 4A. In a case where the resin material 2b of the prepreg 2 is a thermosetting resin, a curing reaction is generated by pressurizing the softened resin material 2b and the resin material 2b is cured. Meanwhile, in a case where the resin material 2b is a thermoplastic resin, the resin material 2b is cured by cooling the heated resin material 2b.

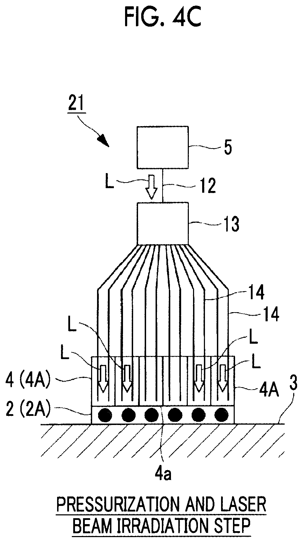

Next, the adjacent pressurizer 4A comes into pressure-contact with the surface of the prepreg 2, and similarly, the surface of the prepreg 2 is irradiated with the laser beam L. By repeating this, as shown in Fig. 4C, all the pressurizers 4A come into pressure-contact with the surface of the prepreg 2, degassing and curing are completed, and the molded resin article 2A is formed. The above-described processes are repeated several times according to the size of the prepreg 2.

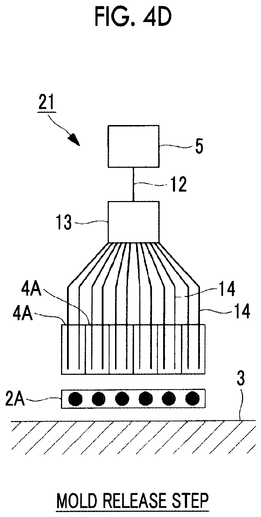

Finally, as shown in Fig. 4D, the pressurizing body 4 (pressurizer 4A) is separated from the molded resin article 2A, and the molded resin article 2A is separated from the forming base 3 to complete the molded resin article 2A (mold release step).

According to the curing device 21 and the curing method, effects similar to those of the curing device 11 and the curing method of the second embodiment are obtained. In addition to the effects, in the curing device 21, the pressurizing body 4 is configured such that the plurality of pressurizers 4A are adjacent to each other, the plurality of pressurizers 4A can come into pressure-contact with and can be separated from the surface of the prepreg 2 independently to each other, and the laser beam L is independently supplied from the laser beam supply unit 5 to each of the pressurizers 4A.

Accordingly, in the pressurization step, the pressure-contacts of the pressurizers 4A are sequentially performed from one point within the pressurization range of the pressurizing body 4 toward the peripheral portion thereof, and the laser beam L can be supplied to only the pressure-contacted pressurizer 4A. Accordingly, the pressurization can be performed such that the bubbles B included in the uncured prepreg 2 are extracted from one point of the pressurization range toward the peripheral portion thereof, the degassing is favorably performed on the prepreg 2, and it is possible to cure the prepreg 2 with high strength.

### [Fourth Embodiment]

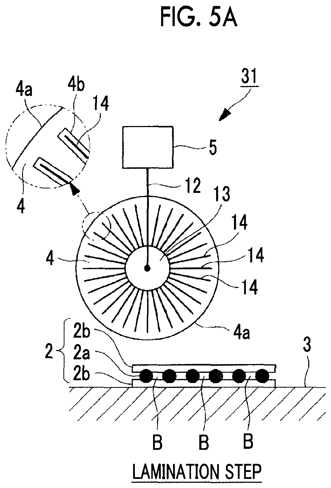

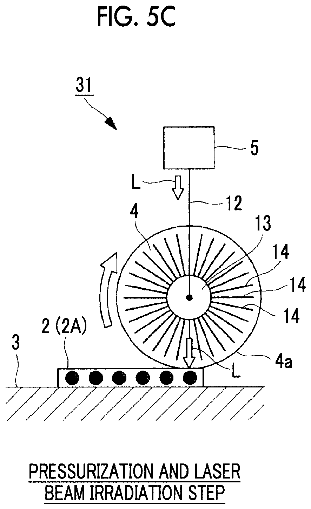

Figs. 5A to 5D are longitudinal sectional views showing a curing device 31 and a curing method according to a fourth embodiment of the present invention.

The curing device 31 is configured to include a roll-type pressurizing body 4 which pressurizes the prepreg 2 laminated on the forming base 3, the molding tool, the jig, or the like, the laser beam supply unit 5 which emits the laser beam L to the prepreg 2 through the pressurizing body 4, the demultiplexer 13 which is the irradiation position adjustment unit adjusting the irradiation position of the laser beam L, and the optical fibers 12 and 14.

For example, the pressurizing body 4 is formed of a cylindrical shape, and the pressurization surface 4a configuring the outer peripheral surface of the pressurizing body 4 is a curved surface which can roll on the surface of the prepreg 2 while coming into pressure-contact with the surface of the prepreg 2. The shape of the pressurizing body 4 is not limited to the cylindrical shape and may be any shape such as a partial cylindrical shape, a spherical shape, a polygonal shape, or the like as long as the peripheral surface can roll on the surface of the prepreg 2 as the pressurization surface 4a. That is, the shape of the pressurizing body 4 may be appropriately selected according to the shape of the prepreg 2 to be molded.

The center portion of the demultiplexer 13 which is positioned at the center portion of the pressurizing body 4 is pivotally supported by a pivot support portion (not shown), and the pressurizing body 4 can integrally rotate with the demultiplexer 13. In addition, the pivot support portion of the demultiplexer 13 can add a force by which the pressurization surface 4a of the pressurizing body 4 comes into pressure-contact with the surface of the prepreg 2.

The laser beam supply unit 5 and the demultiplexer 13 are connected to each other by one optical fiber 12. As shown in Fig. 5A to be partially enlarged, the plurality of optical fibers 14 which extend in a radial direction from the demultiplexer 13 are inserted into the fiber insertion holes 4b which are formed from the inner surface of the pressurizing body 4 toward the pressurization surface 4a side. Since the fiber insertion holes 4b are closed in front of the pressurization surface 4a, the tip portions of the optical fibers 14 do not protrude from the pressurization surface 4a.

The laser beam L which is supplied from the laser beam supply unit 5 to the demultiplexer 13 via one optical fiber 12 is supplied to the pressurizing body 4 via the plurality of optical fibers 14. In this case, the demultiplexer 13 selects the optical fibers 14 and supplies the laser beam L such that the laser beam L is emitted from the laser beam supply unit 5 to only the range of the pressurization surface 4a which comes into pressure-contact with the surface of the prepreg 2.

The curing method for the prepreg 2 is performed as follows by the curing device 31 configured as described above.

First, as shown in Fig. 5A, the uncured prepreg 2 is laminated (placed, wound, or the like) on the forming base 3, the predetermined molding tool, a jig, or the like (lamination step).

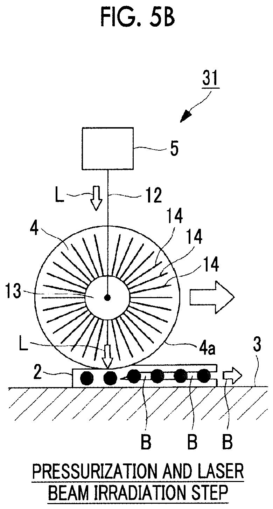

Next, as shown in Figs. 5B to 5C, the pressurizing body 4 slowly rolls while the pressurizing body 4 comes into pressure-contact with the surface of the uncured prepreg 2, and the surface is pressurized by the pressurization surface 4a (pressurization step). In this case, the pressurization is sequentially performed from one location of the surface of the prepreg 2 toward the peripheral portion thereof. As an example, the pressurizing body 4 rolls from one end of the prepreg 2 toward the other end.

In this way, the laser beam from the laser beam supply unit 5 is emitted to the range of the pressurization surface 4a which comes into pressure-contact with the surface of the prepreg 2 while the pressurizing body 4 rolls to pressurize the surface of the prepreg 2 by the pressurization surface 4a (laser beam irradiation step). In this case, the laser beam L is supplied to only the optical fibers 14 corresponding to the range of the pressurization surface 4a which comes into pressure-contact with the surface of the prepreg 2 by the demultiplexer 13 which is the irradiation position adjustment unit. Accordingly, softening is performed from the pressurized portion of the prepreg 2.

If the resin material 2b of the prepreg 2 is softened by the irradiation of the laser beam L, the bubbles B included inside the prepreg 2 are extracted from the range of the prepreg 2 which is pressurized by the pressurizing body 4 to the range of the prepreg 2 which is not pressurized. In a case where the resin material 2b of the prepreg 2 is a thermosetting resin, a curing reaction is generated by pressurizing the softened resin material 2b and the resin material 2b is cured. Meanwhile, in a case where the resin material 2b is a thermoplastic resin, the resin material 2b is cured by cooling the heated resin material 2b.

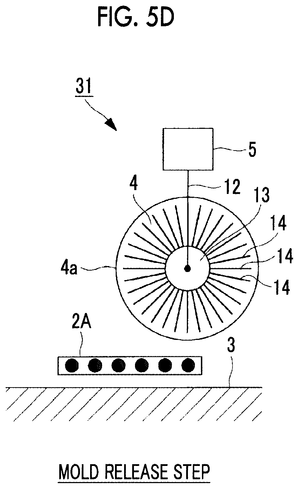

In this way, the entire surface of the prepreg 2 is pressurized by irradiating the surface of the prepreg 2 with the laser beam L while slowing rolling the pressurizing body 4, degassing and curing are completed, and the molded resin article 2A is formed. Finally, as shown in Fig. 5D, the molded resin article 2A is separated from the forming base 3 to complete the molded resin article 2A (mold release step).

According to the curing device 31 and the curing method, effects similar to those of the curing device 21 and the curing method of the third embodiment are obtained. In addition to the effects, in the curing device 31, the pressurization surface 4a of the pressurizing body 4 is formed in the shape such that the pressurization surface can roll on the surface of the prepreg 2 while coming into pressure-contact with the surface, and the laser beam L from the laser beam supply unit 5 is emitted to the range of the pressurization surface 4a which comes into pressure-contact with the surface of the prepreg 2.

Accordingly, in the pressurization surface 4a of the pressurizing body 4 which rolls on the surface of the prepreg 2, the laser beam L from the laser beam supply unit 5 is emitted to only the range which comes into pressure-contact with the surface of the prepreg 2. Therefore, the pressurization can be performed to continuously extract the bubbles included in the uncured prepreg 2 from the one point of the pressurization range toward the peripheral portion thereof, the degassing is favorably performed on the prepreg 2, and it is possible to cure the prepreg 2 with high strength. In addition, it is possible to omit the process of separating the pressurizing body 4 after curing the prepreg 2 from the prepreg 2.

As described above, according to the curing devices 1, 11, 21, and 31 for a resin composite material and the curing methods of the embodiments, it is possible to cure a fiber composite material such as the prepreg 2 with high strength by simple equipment using the laser beam L. In addition, the molded resin article 2A according to the present invention is pressurized and degassed during the curing, and the molded resin article 2A has high strength.

In addition, the present invention is not limited to the configurations of the first to fourth embodiments, modifications and improvements can be appropriately applied within a scope which does not depart from the gist of the present invention, and an embodiment to which modifications and improvements are applied is included in the scope of the present invention.

For example, the entire shape of the pressurizing body 4, the shape of the pressurization surface 4a, or the like is not limited to the above-described embodiments. Regarding the shape of the prepreg 2 or the like, other shape examples are considered.

### Reference Signs List

1, 11, 21, 31: curing device
2: prepreg (resin composite material)
2A: molded resin article
4: pressurizing body
4A: pressurizer
4a: pressurization surface
4b: fiber insertion hole
5: laser beam supply unit
6: irradiation position adjustment unit
12, 14: optical fiber
13: demultiplexer (irradiation position adjustment unit)
L: laser beam
S1: lamination step
S2: pressurization step
S3: laser beam irradiation step
S4: mold release step

## Claims

1. A curing device for a resin composite material, comprising:
a pressurizing body which is formed of a material through which a laser beam passes and comes into pressure-contact with a surface of an uncured resin composite material to pressurize the resin composite material; and
a laser beam supply unit which irradiates the uncured resin composite material with the laser beam through the pressurizing body.

2. The curing device for a resin composite material according to claim 1,
wherein a material of the pressurizing body is quartz glass.

3. The curing device for a resin composite material according to claim 1 or 2, further comprising:
an irradiation position adjustment unit which moves an irradiation position of the laser beam supplied from the laser beam supply unit within a pressurization range of the pressurizing body.

4. The curing device for a resin composite material according to any one of claims 1 to 3,
wherein the laser beam supply unit supplies the laser beam to the resin composite material by an optical fiber.

5. The curing device for a resin composite material according to claim 4,
wherein the laser beam supply unit supplies the laser beam to the resin composite material by a plurality of optical fibers, and
wherein the irradiation position adjustment unit selects any one of the plurality of optical fibers to supply the laser beam.

6. The curing device for a resin composite material according to claim 4 or 5,
wherein the optical fiber is inserted into a fiber insertion hole formed in the pressurizing body and the fiber insertion hole is closed in front of a pressurization surface of the pressurizing body.

7. The curing device for a resin composite material according to any one of claims 1 to 6,
wherein the pressurizing body is configured such that a plurality of pressurizers are adjacent to each other,
wherein the plurality of pressurizers can come into pressure-contact with and be separated from the surface of the resin composite material independently to each other, and
wherein the laser beam is independently supplied from the laser beam supply unit to each of the pressurizers.

8. The curing device for a resin composite material according to any one of claims 1 to 6,
wherein the pressurization surface of the pressurizing body has a shape such that the pressurization surface can roll on the surface of the resin composite material while coming into pressure-contact with the surface of the resin composite material, and
wherein the laser beam supply unit emits the laser beam within a range of the pressurization surface which comes into pressure-contact with the surface of the resin composite material.

9. A curing method for a resin composite material, comprising:
a pressurization step of allowing a pressurizing body formed of a material through which a laser beam passes to come into pressure-contact with a surface of an uncured resin composite material to pressurize the surface of the uncured resin composite material; and
a laser beam irradiation step of irradiating the uncured resin composite material with a laser beam through the pressurizing body.

10. The curing method for a resin composite material according to claim 9,
wherein in the laser beam irradiation step, the irradiation position of the laser beam expands from one point of the pressurization range of the pressurizing body toward a peripheral portion thereof.

11. The curing method for a resin composite material according to claim 9 or 10,
wherein in the pressurization step, pressurization is sequentially performed from one point of the pressurization range of the pressurizing body toward the peripheral portion thereof.

12. A molded resin article which is manufactured by the curing method for a resin composite material according to any one of claims 9 to 11.

## Amended claims

### Amended claims under Art. 19.1 PCT

**1.** (Amended) A curing device for a resin composite material, comprising:
a pressurizing body which is formed of a material through which a laser beam passes and comes into pressure-contact with a surface of an uncured resin composite material to pressurize the resin composite material; and
a laser beam supply unit which irradiates the uncured resin composite material with the laser beam through the pressurizing body to heat the resin composite material.

**2.** The curing device for a resin composite material according to claim 1,
wherein a material of the pressurizing body is quartz glass.

**3.** The curing device for a resin composite material according to claim 1 or 2, further comprising:
an irradiation position adjustment unit which moves an irradiation position of the laser beam supplied from the laser beam supply unit within a pressurization range of the pressurizing body.

**4.** The curing device for a resin composite material according to any one of claims 1 to 3,
wherein the laser beam supply unit supplies the laser beam to the resin composite material by an optical fiber.

**5.** The curing device for a resin composite material according to claim 4,
wherein the laser beam supply unit supplies the laser beam to the resin composite material by a plurality of optical fibers, and
wherein the irradiation position adjustment unit selects any one of the plurality of optical fibers to supply the laser beam.

**6.** The curing device for a resin composite material according to claim 4 or 5,
wherein the optical fiber is inserted into a fiber insertion hole formed in the pressurizing body and the fiber insertion hole is closed before a pressurization surface of the pressurizing body.

**7.** The curing device for a resin composite material according to any one of claims 1 to 6,
wherein the pressurizing body is configured such that a plurality of pressurizers are adjacent to each other,
wherein the plurality of pressurizers can come into pressure-contact with and be separated from the surface of the resin composite material independently to each other, and
wherein the laser beam is independently supplied from the laser beam supply unit to each of the pressurizers.

**8.** The curing device for a resin composite material according to claim 1 to 6,
wherein the pressurization surface of the pressurizing body has a shape such that the pressurization surface can roll on the surface of the resin composite material while coming into pressure-contact with the surface of the resin composite material, and
wherein the laser beam supply unit emits the laser beam within a range of the pressurization surface which comes into pressure-contact with the surface of the resin composite material.

**9.** (Amended) A curing method for a resin composite material, comprising:
a pressurization step of allowing a pressurizing body formed of a material through which a laser beam passes to come into pressure-contact with a surface of an uncured resin composite material to pressurize the surface of the uncured resin composite material; and
a laser beam irradiation step of irradiating the uncured resin composite material with the laser beam through the pressurizing body to heat the resin composite material.

**10.** The curing method for a resin composite material according to claim 9,
wherein in the laser beam irradiation step, the irradiation position of the laser beam expands from one point of the pressurization range of the pressurizing body toward a peripheral portion thereof.

**11.** The curing method for a resin composite material according to claim 9 or 10,
wherein in the pressurization step, pressurization is sequentially performed from one point of the pressurization range of the pressurizing body toward the peripheral portion thereof.

**12.** A molded resin article which is manufactured by the curing method for a resin composite material according to any one of claims 9 to 11.
